# EUROPEAN PATENT APPLICATION

(11) **EP 3 211 782 A1**
(43) Date of publication of application: **30.08.2017**
(21) Application number: 16157050.2
(22) Date of filing: 24.02.2016
(51) Int. Cl.: H02M 7/19, H02M 5/257, H02M 5/12, H02M 1/42, H02M 5/293, H02M 1/00

(54) **CONFIGURABLE AC DC CONVERTER**

(71) Applicant: Hydrogenics Europe NV, 2260 Oevel (BE)
(72) Inventor: Daneels, Ruben, 2260 Oevel (BE); Van den Heuvel, Jonas, 3580 Beringen (BE)
(74) Representative: Plas, Axel Ivo Michel

(57) **Abstract**

The present invention relates to an AC to DC converter (100) for converting an AC input voltage to a configurable DC output voltage (160). The converter comprises a plurality of transformers (120, 130). The converter further comprises a rectifier circuit (150) for providing the configurable DC output voltage. Each output of the transformers is thereby connected to the rectifier circuit such that a respective transformer contributes to a portion (154, 155) of the DC output voltage. The converter also comprises at least one voltage controller (105, 106) for configuring a voltage applied to a primary winding (122, 132) of respectively at least one transformer such that the at least one transformer contributes to a configurable portion of the DC output voltage.

## Description

### Field of the Invention

The present invention generally relates to the field of configurable AC to DC converters for high power applications, i.e., converters with an output power of typically more than 5kW. With such a converter, a configurable DC output voltage can be obtained from a fixed AC input voltage. Dependent on the type of load driven by the converter the DC output voltage is then configurable between a predetermined minimum DC output voltage and a predetermined maximum DC output voltage.

To achieve a galvanic isolation between the AC input and DC output, such converters also comprise a transformer with at least a primary winding at the AC input voltage side and a secondary winding at the DC output voltage side.

A certain configured DC output voltage or thus a certain target DC voltage is to be understood as the average DC output voltage applied to a load over a certain time period, where the time period is typically in the order of seconds. According to one application, the target DC voltage may be achieved by a constant DC output voltage over this time period corresponding to the target DC voltage. According to another application, the target DC voltage may be achieved by a variable DC output voltage over this time period where the average of this variable DC output voltage corresponds to the target DC voltage. The variable DC output voltage may for example change regularly from a first to a second DC voltage and vice versa. Depending on the amount of time that the first and second DC output voltage is applied to the load, the target and thus average DC voltage can be configured somewhere between the first and second DC output voltage. This principle is typically referred to as burst firing.

### Background of the Invention

High power configurable AC to DC converters are typically used when a load accepts different DC input voltages for its operation, for example, when the speed of a DC motor can be varied by varying its DC input voltage. Another example is in the field of hydrogen cell stacks for the generation of hydrogen by electrolysis. Such a cell stack is operated by a DC voltage. By varying the DC input voltage within a certain range, the DC current varies and thus the amount of hydrogen produced is controlled.

Important quality requirements are typically imposed on the converter, more particularly on the stability of the delivered DC voltage and the power factor of the system. Especially in configurable AC to DC converters it is a challenge to keep the power factor high enough over the complete range of the delivered DC output voltage.

In WO2015057940A1 a power conversion apparatus for controllably converting AC current to DC current is disclosed. The converter comprises a single transformer where a plurality of rectifiers are connected to the output winding of the transformer. At least one of the rectifiers is a controllable bridge rectifier circuit and all rectifiers are connected in series in order to provide the controllable DC output voltage. The rectifiers are then selectively operated, i.e., the controllable bridge rectifier circuit is operated in voltage regulation mode while the other rectifier circuits are operated in either bypass mode or full-output mode thereby maximizing the overall power-factor for different DC output voltages.

A disadvantage of the converter disclosed in WO2015057940A1 is that the apparatus produces a lot of ripple on the DC output voltage. To mitigate this ripple a further filtering circuit is typically needed between the converter and the load. Another disadvantage of WO2015057940A1 is that during the start-up of the converter a large start-up current will appear in the transformer making additional soft-start or auto-start circuits necessary.

### Summary of the Invention

It is an object of the present invention to provide an AC to configurable DC converter with a good power factor over its configurable range that does not exhibit the above mentioned disadvantages.

This object is achieved by an AC to DC converter for converting an AC input voltage to a configurable DC output voltage comprising:
- a plurality of transformers;
- a rectifier circuit for providing the configurable DC output voltage; wherein each output of the transformers is connected to the rectifier circuit such that a respective transformer contributes to a portion of the DC output voltage;
- at least one voltage controller for configuring a voltage applied to a primary winding of respectively at least one transformer such that the at least one transformer contributes to a configurable portion of the DC output voltage.

The configuration of the DC output voltage is thus performed before the transformers by a voltage controller. The voltage controller is a circuit adapted to change the voltage applied to the primary winding of the transformer it is connected to. This way, at least one of the transformers applies a configurable voltage to the rectifier circuit thereby making the DC output voltage configurable.

Typically, the power factor of a configurable converter circuit comprising a single voltage controller followed by a single transformer and rectifier is at its optimum when the controller applies the full AC input voltage to the single transformer, i.e., when the single voltage controller operates in bypass mode. According to the invention, the configurable converter will comprise a least two DC output voltages at which the converter operates at its maximum power factor. For example, when the converter comprises two transformers and one voltage controller before one of the transformers, the maximum power factor is achieved when the DC output voltage is completely provided by the first transformer and when the DC output voltage is completely provided the first and a second transformer. By the voltage controller, DC output voltages may then be achieved between the DC output voltage delivered by the first transformer and the DC output voltage delivered by the first and second transformer together.

In other words, depending on the configuration, the power factor of the converter will achieve a maximum for different DC output voltages and, because of the combined effect, will decrease less in between these voltages than for the situation where only one transformer and voltage controller is used. The claimed invention thus provides in a configurable converter with an improved power factor over the complete DC output range.

It is a further advantage that the voltage controller(s) are connected to the primary winding as the voltage ripple on the DC output voltage is reduced in comparison with the case where the voltage controller is integrated within the rectifier or where the voltage controller is located after the transformer. Furthermore, a further filter at the DC output voltage is no longer needed as the ripple on the DC voltage is comparable to that of an uncontrolled pulse rectifier bridge.

It is also an advantage that a plurality of transformers is used to contribute as different portions to the DC output voltage. This way, the voltage controller can be controlled independently from other voltage controllers. This is for example not the case when a plurality of different voltage controllers is connected to the same transformer, i.e., connected to the same primary winding or to a different primary winding with a shared secondary winding. In such a case a more complex control scheme is needed as a shortcut from one voltage controller to another one may otherwise occur.

According to an embodiment of the invention, the voltage controller corresponds to a burst firing controller.

A burst firing controller is to be understood as a voltage controller that is adapted to apply either a zero voltage or the full AC input voltage to the primary winding of the transformer over one or more full periods of the AC input voltage. In other words, the burst firing controller configures the DC output voltage by operating for a first predefined number of periods in a full blocking mode and then for a second predefined number of periods in a full conduction mode. This may for example be achieved by contactors in between the AC input voltage and primary winding of the transformer. By controlling the ratio between the first and second number of periods the overage DC output voltage applied to the load can be configured.

A advantage of the burst firing controller is that the power factor of the converter is always optimal as the individual transformers are either receiving the full AC input voltage or a zero voltage. Moreover, by selecting the amount of transformers, the set of DC output voltages used for the burst firing can be selected within the applicable range of the load.

According to another embodiment, the voltage controller is adapted to configure the voltage applied to the primary winding in a range from a full blocking mode to a maximum voltage corresponding to the AC input voltage.

In other words, the voltage controller is adapted to apply an input voltage to the primary winding from a continuous range of average AC voltages ranging from a zero voltage in full blocking mode to the AC input voltage in full conduction mode.

An advantage of such a continuous voltage controller is that the DC output voltage can be configured continuously from a certain minimum DC output voltage to a certain maximum DC output voltage depending on the configuration of the transformers and voltage controllers. Moreover, depending on this configuration, the DC output voltage or voltages for which a maximum power factor should be achieved can be selected.

Preferably, the voltage controller is a phase angle controller, also known as a phase cutting or a phase fired controller. A phase angle controller performs a specific type of delayed pulse train control. During a period of the AC input voltage, a phase angle controller will block the current form the AC input source starting from or up to a specific phase angle.

Such a phase angle controller may comprise anti-parallel connected silicon controlled rectifiers or thyristors in order to perform the phase angle control of the AC input.

According to an embodiment of the invention the AC to DC converter comprises at least two voltage controllers for configuring voltages applied to the primary winding of respectively at least two transformers.

In this case, it is advantageous that, when providing the DC output voltage, at least all but one of the voltage controllers is either in full blocking mode or providing the maximum voltage. This way, all voltage controllers and corresponding transformers operate at their maximum power factor and only one voltage controller operates at a sub-optimum power factor.

More advantageously, all transformers in the converter comprise a voltage controller connected to their respective primary winding. This way, the transformer can be soft-started without additional circuitry.

According to an embodiment, the rectifier circuit comprises a plurality of rectifiers. Each transformer is then connected to a respective rectifier for generating the portion of the DC output voltage. The plurality of rectifiers is then connected in series for providing the DC output voltage.

Such a respective rectifier may for example correspond to a full wave diode bridge rectifier.

According to an alternative embodiment, each transformer comprises an output pin per phase of the AC input voltage. The rectifier circuit then further comprises first, second and third diodes. For each phase, output pins of the same phase of one transformer are interconnected with output pins of the same phase of one other transformer by the first diodes such that a one-by-one current directed interconnection of the plurality of transformers is obtained with a top transformer at a cathode side of the interconnection and a bottom transformer at an anode side of the interconnection. An anode of each one of the second diodes is then connected to a respective output pin of the top transformer. A cathode of each one of the second diodes is connected together thereby defining a positive output of the DC output voltage. A cathode of each one of the third diodes is connected to a respective output pin of the bottom transformer. An anode of each one of the third diodes is connected together thereby defining a negative output of the DC output voltage.

By the above circuitry, the same rectifying effect is achieved but with less diodes than in the former embodiment resulting in a reduction of components. Each transformer still contributes to a portion of the DC output voltage but the intermediate DC voltage nodes that serve no further function are no longer present.

Advantageously, the output of one transformer is further phase shifted with respect to an output of another transformer in order to minimize harmonic distortion in the DC output voltage.

According to a second aspect, the invention relates to the use of the AC to DC converter (100, 300) according to the first aspect for regulation of the current in a hydrogen cell stack.

According to a third aspect, the invention relates to a method for operating the AC to DC converter (100, 300) according to the first aspect when the converter comprises at least two voltage controllers; the method comprising the step of operating at least all but one of the voltage controllers in either full blocking mode or full conduction mode.

According to a further aspect, the invention also relates to an AC to DC rectifying circuit for converting a plurality of AC input voltages to a DC output voltage wherein each AC input voltage contributes to the DC output voltage. The rectifying circuit comprises input pins for receiving phases of the plurality of the AC input voltages and a first and second output pin corresponding respectively to the positive and negative polarity of the DC output voltage. The rectifying circuit further comprises first, second and third diodes. For each phase, input pins of the same phase are interconnected with pins of the same phase of one other transformer by the first diodes such that a one-by-one current directed interconnection of the plurality of input pins is obtained for each phase with top input pins at a cathode side of the interconnection and bottom input pins at an anode side of the interconnection. An anode of each one of the second diodes is then connected to a respective top input pin. A cathode of each one of the second diodes is connected together thereby defining the first output pin. A cathode of each one of the third diodes is connected to a respective bottom input pin. An anode of each one of the third diodes is connected together thereby defining the second output pin.

### Brief Description of the Drawings

Fig. 1 illustrates a configurable AC to DC converter according to an embodiment of the invention;
Fig. 2 illustrates the power factor of the converter according to Fig. 1 for the configurable range of DC output voltages; and
Fig. 3 illustrates a configurable AC to DC converter according to an embodiment of the invention;
Fig. 4 illustrates the power factor of the converter according to Fig. 3 for the configurable range of DC output voltages.

### Detailed Description of Embodiment(s)

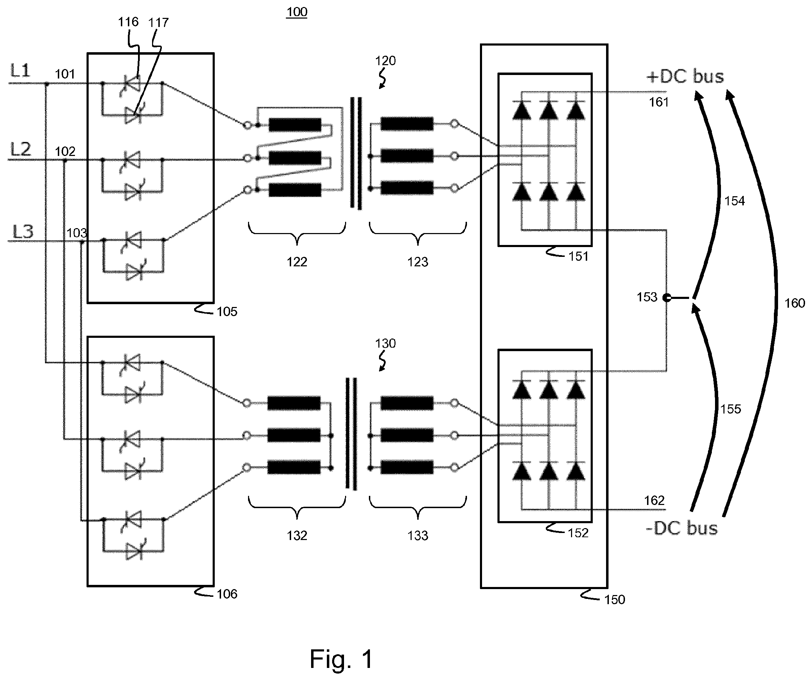

Fig. 1 illustrates an AC to DC converter 100 according to an embodiment of the invention. The converter 100 takes the 3 phases of an AC (Alternating Current) voltage source as input at its respective input pins 101, 102 and 103. The converter converts this AC input voltage to a configurable DC output voltage 160 between its output pins 161 and 162.

The AC input voltage is applied to two voltage controllers 105 and 106 within the converter 100. The voltage controllers are phase angle controllers, sometimes also referred to as phase fired or phase edge controllers. For each phase of the AC input voltage, the phase angle controller allows controlling the phase angle starting from which or up to which the voltage controller conducts current to or from the converter during a period of the AC input voltage. In the embodiment of Fig. 1 the phase angle controllers 105 and 106 are implemented as anti-parallel connected thyristors 116 and 117 per phase. Instead of thyristors, other devices such as silicon controlled rectifiers, triacs, thyratrons or any other gated semiconductor devices, e.g., MOSFETs, IGBTs are gated diode device, may be used as long as they can be controlled into and out of conduction at a predetermined phase of the applied waveform. By the control of the phase angle controllers 105 and 106 a configurable AC voltage is obtained which can be varied between zero voltage when the controllers operates in a full blocking mode to a maximum voltage corresponding to the AC input voltage when the controllers operate in full conduction mode.

The output pins of the phase angle controllers 105, 106 are connected to the respective 3-phase transformers 120 and 130. These transformers provide a galvanic isolation between the load driven by the DC output voltage 160 and the AC input voltage. Preferably the outputs between the transformers are phase shifted with respect to one another in order to minimize the harmonic distortion produced by the converter 100. In the embodiment of Fig. 1 this phase shift is achieved by the connecting the primary winding 122 of the first transformer 120 in a star configuration and the primary winding 132 of the second transformer 130 in a delta configuration. This way, the outputs are 30 degrees phase shifted with respect to one another.

The outputs pins of the secondary windings 123 and 133 of both transformers 120 and 130 are connected to a rectifying circuit 150. This circuit comprises two rectifiers 151 and 152. First rectifier 151 converts the AC voltage of the first transformer 120 to a first DC voltage portion 154 between the output pin 161 and intermediate node 153. Similarly, second rectifier 152 converts the AC output voltage of the second transformer 130 to a second DC voltage portion 155 between the intermediate node 153 and output pin 162. In the embodiment illustrated in Fig. 1, the rectifiers 151 and 152 correspond to full wave diode bridge rectifies.

By the converter of Fig. 1 a configurable DC output voltage 160 is achieved. The first configurable portion 154 is achieved by a first stage comprising voltage controller 105, transformer 120 and rectifier 151. This portion 154 may then be configured by selecting the appropriate phase angle of the phase angle controller 105. The second configurable portion 155 is achieved by a second stage comprising voltage controller 106, transformer 130 and rectifier 152. This portion 155 may then be configured by selecting the appropriate phase angel of the phase angle controller 106. By the serial connection of rectifiers 151 and 152, the DC output voltage 160 corresponds to the sum of voltage portions 154 and 155.

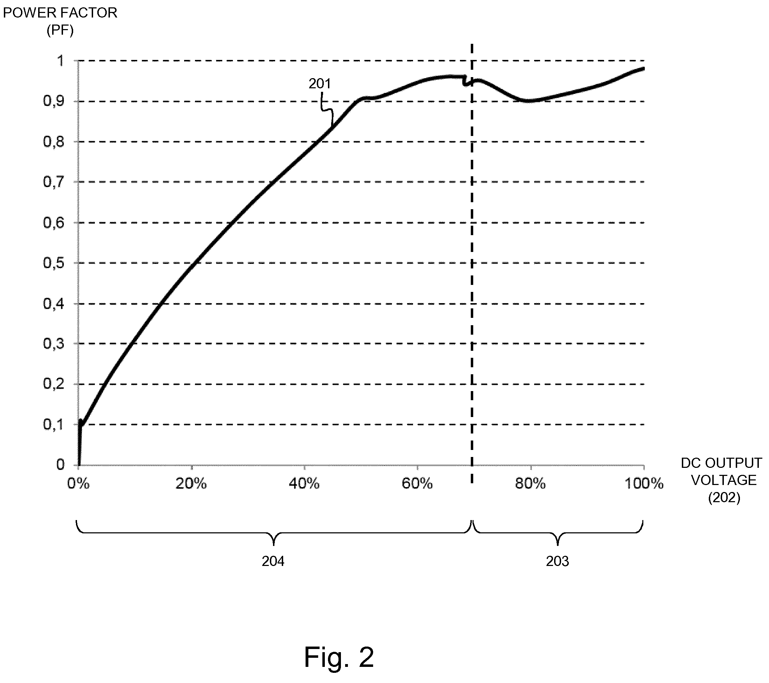

It will now be described how, according to a preferred embodiment and with reference to Fig. 2, a range of configurable DC output voltages is obtained. Fig. 2 illustrates the power factor of the converter system of Fig. 1 as a function of the configured DC output voltage 202 by the curve 201. Voltage 202 is given as a percentage value of the ratio between the configured DC output voltage and the maximum DC output voltage of the converter system. The maximum DC output voltage is thereby determined by the AC input voltage and the voltage ratio of the two transformers 120 and 130. In the example of Fig. 2, the first transformer 120 contributes to 70% of the maximum DC output voltage and the second transformer 130 contributes to 30% of the maximum DC output voltage.

In order to configure the converter 100 to generate a DC output voltage in the range 204 of 0% to 70%, the second phase angle controller 106 is configured in full blocking mode and the first phase angle controller 105 is configured such that the generated DC output voltage portion 154 corresponds to the desired DC output voltage. When phase angle controller 105 is in full blocking mode, both controllers 105 and 106 are in blocking mode and thus a DC output voltage 202 of 0% is generated. When phase angle controller 105 is in full conduction mode, the DC output voltage is completely generated by the first transformer 120 and rectifier 151, i.e., the DC output voltage will be at 70%. As the phase angle controller is not performing any phase cutting at that moment, the power factor will be optimal at the 70% DC output voltage. Then, when a DC output voltage above 70% is desired, the second voltage controller 106 is used between its blocking mode to deliver the 70% and its full conduction mode to deliver the 100% DC output voltage while the first phase angle controller 105 is in full conduction mode. Within the range 203, i.e., within 70% and 100%, the phase angle controller 106 is performing phase cutting on the input voltage and, thus, the power factor will drop. However, as the first phase angle controller 105 is still in full conduction mode, the controller 106 will only contribute partially to the power factor.

By operating the converter to the above sequence, a DC output range 203 is thus obtained with a high power factor. By choosing the voltage conversion ratio of the transformers 120 and 130, this range 203 may further be configured such that the range 203 corresponds to the working range of a load that will be driven by the converter 100.

Furthermore, the DC output voltage 160 can be gradually increased from 0 Volts to the configured DC output voltage. This way, the transformers 120 and 130 are soft-started by the phase angle controllers 105 and 106 thereby avoiding the use of special circuitry to protect the transformer from high start-up currents.

It should further be noted that the order of operation as illustrated in Fig. 2 is not restricted to the sequence of first controller 105 and then controller 106. Alternatively, first controller 106 and then controller 105 may be operated. This would result in a swap of the ranges 203 and 204 and may be advantageous depending on the type of load and the DC output voltage that is used the most, i.e., the DC output voltage that should have the most optimum power factor.

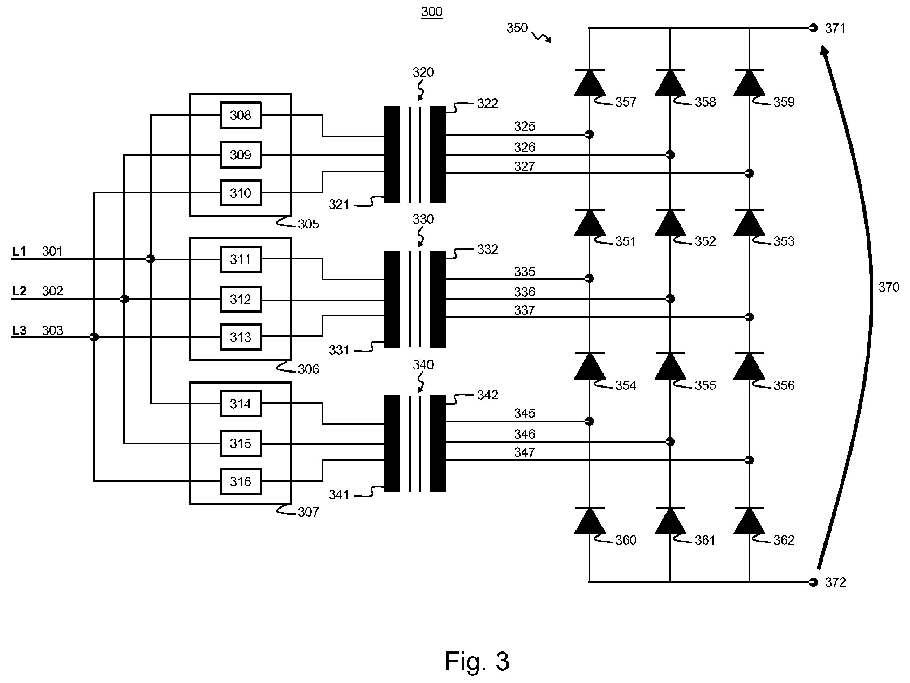

Fig. 3 illustrates an AC to DC converter 300 according to an embodiment of the invention. The converter 300 takes the 3 phases of an AC (Alternating Current) voltage source as input at its respective input pins 301, 302 and 303. The converter converts this AC input voltage to a configurable DC output voltage 370 between its output pins 371 and 372.

The AC input voltage is applied to three voltage controllers 305, 306 and 307 within the converter 300. The voltage controllers are phase angle controllers. In the embodiment of Fig. 3 the phase angle controllers 305, 306 and 307 are implemented as anti-parallel connected thyristor pairs 308-316 per phase. Instead of thyristors, other devices such as silicon controlled rectifiers, triacs, thyratrons or any other gated semiconductor devices, e.g., MOSFETs, IGBTs or gated diode devices, may be used as long as they can be controlled into and out of conduction at a predetermined phase of the applied waveform. By the control of the phase angle controllers 305, 306 and 307 a configurable AC voltage is obtained which can be varied between zero voltage when the controllers operates in a full blocking mode to a maximum voltage corresponding to the AC input voltage when the controllers operate in bypass mode.

The output pins of the phase angle controllers 305, 306 and 307 are connected to the respective 3-phase transformers 320, 330 and 340, i.e., to the primary windings 321, 331 and 341 of the respective transformers. These transformers provide a galvanic isolation between the load driven by the DC output voltage 370 and the AC input voltage. Preferably the outputs between the transformers are phase shifted with respect to one another in order to minimize the harmonic distortion produced by the converter 300. This may for example be achieved by a different configuration of the primary and/or secondary windings as also described in Fig. 1. This way a zero degrees phase shift at the output of transformer 330, a minus 20 degrees phase shift at the output of transformer 320 and a plus 20 degrees phase shift at the output of transformer 340 may for example be obtained.

The outputs pins 325-327, 335-337 and 345-347 of the respective secondary windings 322, 332 and 342 of transformers 320, 330 and 340 are connected to a rectifying circuit 350. Instead of using serial connected full wave diode bridge rectifiers as in the embodiment of Fig. 1, a reduction of the amount of diodes is achieved by supressing intermediate nodes such as node 153. When suppressing the intermediate nodes, two diodes that are connected in series are obtained which are replaced by a single diode, i.e., diodes 351-353 and 354-356 of the current embodiment.

For each phase of the AC voltage at the output of the transformers 320, 330 and 340, the output pins of the same phase of one transformer are interconnected with output pins of the same phase of one other transformer by diodes. In other words, diodes 351-353 are placed between respective pins 325-327 and 335-337 and diodes 354-356 are placed between respective pins 335-337 and 345-347. The diodes are thereby connected in such a way that a one-by-one current directed interconnection of the plurality of transformers is obtained with the top transformer 320 at a cathode side of the interconnection and the bottom transformer 340 at an anode side of the interconnection. In other words, the diodes connected to the same phase of the respective transformers form a serial connection of diodes each time with the anode of one diode connected to the cathode of another diode.

Diodes 357-359 are then connected to the respective output pins 325-327 of the top transformer 320 by their anode The cathode of these diodes 357-359 are connected together thereby forming the positive output 371 of the DC output voltage 370. Similarly, diodes 360-362 are connected to the respective output pins 345-347 of the bottom transformer 340 by their cathode. The anode of these diodes 360-362 are connected together thereby forming the negative output 372 of the DC output voltage 370.

By the converter of Fig. 3 a configurable DC output voltage 370 is achieved. A first configurable portion of the output is achieved by a first stage comprising voltage controller 305 and transformer 320. A second configurable portion of the output is achieved by a second stage comprising voltage controller 306 and transformer 330. A third configurable portion of the output is achieved by a third stage comprising voltage controller 307 and transformer 340. All three outputs of the transformers are then rectified to the DC output voltage by the rectifier circuit 350. The amount of contribution of the several stages to the DC output 370 is determined by the voltage ratio of each transformer and by the configured phase angle of the respective phase angle controllers 305, 306 and 307.

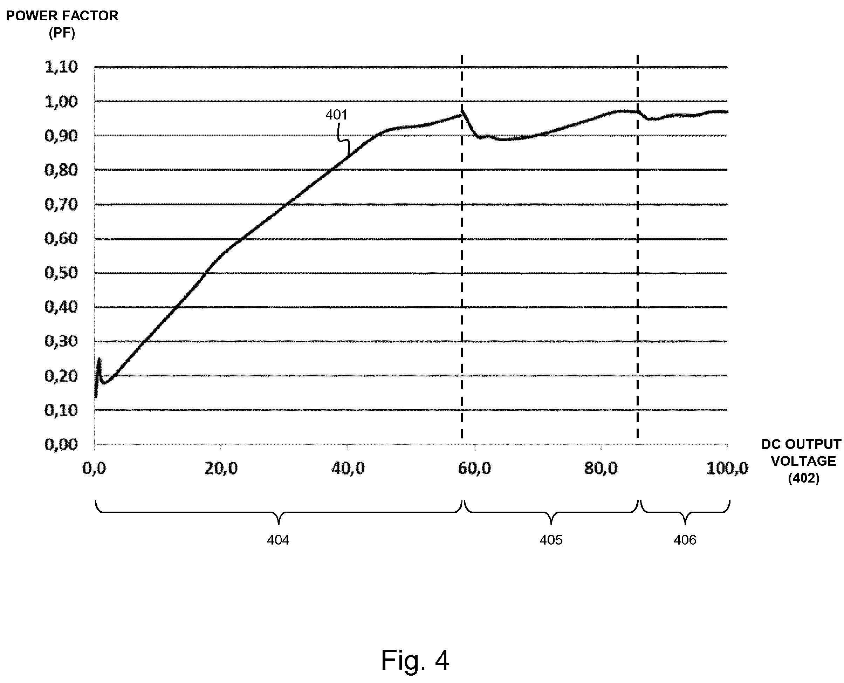

The preferred operation mode of the converter 300 described above is similar to the operation mode of the converter 100 as described with reference to Fig. 2. Fig. 4 illustrates by the curve 401 the power factor of a converter 300 for different values of the configured DC output voltage 402 when operated as described below. The DC output voltage 402 is given as a percentage value of the ratio between the configured DC output voltage and the maximum DC output voltage of the converter system 300. The maximum DC output voltage is thereby determined by the AC input voltage and the voltage ratio of the transformers 320, 330 and 340. In the example of Fig. 3, the first transformer 320 contributes to 58% of the maximum DC output voltage, the second transformer 330 contributes to 29% of the maximum DC output voltage and the third transformer 340 contributes to 13% of the maximum DC output voltage.

In order to configure the converter 300 to generate a DC output voltage in the first range 404 of 0% to 58%, the second and third phase angle controllers 306 and 307 are configured in full blocking mode and the first phase angle controller 305 is configured such that the contributed DC output voltage portion corresponds to the desired DC output voltage. When phase angle controller 305 is in full blocking mode, all controllers 305-307 are in blocking mode and thus a DC output voltage 402 of 0% is generated. When phase angle controller 305 is in bypass mode, the DC output voltage is completely generated by the first transformer 320, i.e., the DC output voltage will be at 58%. As the phase angle controller is not performing any phase cutting at that moment, the power factor will be optimal at the 58% DC output voltage.

In order to configure the converter 300 to generate a DC output voltage in the second range 405 of 58% to 87%, the first controller 305 remains in bypass mode and the third controller 307 is still in full-blocking mode. The second phase angle controller 306 is then configured accordingly such that the DC output voltage portion corresponds to the desired DC output voltage. When phase angle controller 306 is in full blocking mode, a DC output voltage 402 of 58% is generated. When phase angle controller 306 is in bypass mode, the DC output voltage will be at 87%. By configuring the phase angle of the second controller 306 a desired output voltage in the range 405 can be obtained.

When a DC output voltage above 87% is desired, both first and second voltage controller 305 and 306 are in bypass in order to deliver the 87%. By configuring the appropriate phase angle of the third controller 307, a desired DC output voltage in the range 406 may then be obtained.

By operating the converter 300 according to the above sequence, a DC output range is thus obtained with a high power factor. By choosing the voltage conversion ratio of the transformers 320, 330 and 340 appropriately the high power factor working range may be adapted to the working range of the a load that will be driven by the converter 300.

Furthermore, the DC output voltage 370 can be gradually increased from 0 Volts to the desired DC output voltage. This way, the transformers 320, 330 and 340 are soft-started by the phase angle controllers 305-307 thereby avoiding the use of special circuitry to protect the transformer from high start-up currents.

It should further be noted that the order of operation as illustrated in Fig. 4 is not restricted to the sequence of first controller 305, then controller 306 and then controller 307. The same converter 300 may be operated in a different sequence. This would result in a change of the ranges 404, 405 and 406 and may be advantageous depending on the type of load and the DC output voltage that is used the most.

According to further embodiments of the invention, instead of the phase angle controllers 105-106 or 305-307, burst firing controllers are used. A burst firing controller is to be understood as a voltage controller that is adapted to apply either a zero voltage or the full AC input voltage to the primary winding of the transformers over one or more full periods of the AC input voltage. In other words, the burst firing controller configures the DC output voltage by operating for a first predefined number of periods in a full blocking mode and then for a second predefined number of periods in a bypass mode. This may for example be achieved by using contactors in between the AC input voltage and primary winding of the transformers. Alternatively, the phase angle controllers 105-106 or 305-307 may be operated in a burst firing mode. In such a case they are no longer phase angle controller but the same hardware is used to achieve the burst firing. By controlling the ratio between the first and second number of periods the average DC output voltage applied to the load can then be configured.

According to further embodiments one of the voltage controllers, being it a phase angle controller or a burst firing controller may be omitted from the converter 100 or 300. In such a case, the AC input voltage is directly applied to one of the transformers 120, 130 or 320, 330, 340 while the other transformers still have a voltage controller in front of them. This has the advantage that a saving is made on components, i.e., on the omitted voltage controllers. On the other hand, the DC output voltage can no longer be continuously varied over the complete range, i.e., from zero Volts. In this case, the configurable range of the converter will start at a certain DC output voltage determined by the DC voltage contribution of the transformer that does not have a voltage controller in front of it. Referring back to Fig. 2, this would mean that the DC output voltage is only configurable in the range 203. Referring back to Fig. 4, this would mean that the DC output voltage is only configurable in the range 405 and 406.

The above embodiments illustrate the invention for a 3-phase AC input voltage. It will however be clear to the skilled person that the same principles may be applied to other systems, in particular converters with a 1- or 2-phase AC input voltage.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. AC to DC converter (100, 300) for converting an AC input voltage to a configurable DC output voltage (160, 202, 370, 402) comprising:
- a plurality of transformers (120, 130, 320, 330, 340);
- a rectifier circuit (150, 350) for providing the configurable DC output voltage; wherein each output of the transformers is connected to the rectifier circuit such that a respective transformer contributes to a portion (154, 155) of the DC output voltage;
- at least one voltage controller (105, 106, 305, 306, 307) for configuring a voltage applied to a primary winding (122, 132, 320, 330, 340) of respectively at least one transformer such that the at least one transformer contributes to a configurable portion of the DC output voltage.

2. AC to DC converter (100, 300) according to claim 1 wherein the voltage controller corresponds to a burst firing controller.

3. AC to DC converter (100, 300) according to claim 1 wherein the voltage controller is adapted to configure the voltage applied to the primary winding in a range from a full blocking mode to a maximum voltage corresponding to the AC input voltage.

4. AC to DC converter (100, 300) according to claim 3 wherein the voltage controller is a phase angle controller (105, 106).

5. AC to DC converter (100, 300) according to claim 4 wherein the phase angle controller comprises anti-parallel connected silicon controlled rectifiers or thyristors (116, 117).

6. AC to DC converter (100, 300) according to any one of the preceding claims comprising at least two voltage controllers (105, 106, 305, 306, 307) for configuring voltages applied to the primary winding (122, 132, 320, 330, 340) of respectively at least two transformers (120, 130, 320, 330, 340).

7. AC to DC converter (100, 300) according to claim 6 and any one of claims 3 to 5 wherein, when providing the DC output voltage, at least all but one of the voltage controllers is either in full blocking mode or providing the maximum voltage.

8. AC to DC converter (100, 300) according to any one of the preceding claims wherein the rectifier circuit (150) comprises a plurality of rectifiers (151, 152); and wherein each transformer is connected to a respective rectifier for generating the portion of the DC output voltage (160); and wherein the plurality of rectifiers is connected in series for providing the DC output voltage.

9. AC to DC converter (100, 300) according to claim 8 wherein the respective rectifier corresponds to a full wave diode bridge rectifier (151, 152).

10. AC to DC converter (100, 300) according to any one of claims 1 to 7 wherein each transformer comprises an output pin (325-327, 335-337, 345-347) per phase of the AC input voltage; and wherein the rectifier circuit (350) comprises:
- first diodes (351-353, 354-356); and wherein, for each phase, output pins of the same phase of one transformer (325-326) are interconnected with output pins of the same phase (335-337) of one other transformer by the first diodes such that a one-by-one current directed interconnection of the plurality of transformers (320, 330, 340) is obtained with a top transformer (320) at a cathode side of the interconnection and a bottom transformer (340) at an anode side of the interconnection;
- second diodes (357-359); and wherein an anode of each one of the second diodes is connected to a respective output pin (325-327) of the top transformer (320); and wherein a cathode of each one of the second diodes is connected together thereby defining a positive output (371) of the DC output voltage;
- third diodes (360-362); and wherein a cathode of each one of the third diodes is connected to a respective output pin (345-347) of the bottom transformer (340); and wherein an anode of each one of the third diodes is connected together thereby defining a negative output (372) of the DC output voltage.

11. AC to DC converter (100, 300) according to any one of the preceding claims wherein an output of one transformer is phase shifted with respect to an output of another transformer in order to minimize harmonic distortion in the DC output voltage.

12. AC to DC converter (100, 300) according to any one of the preceding claims wherein each transformer has a voltage controller connected to their respective primary winding.

13. Use of the AC to DC converter (100, 300) according to any one of the preceding claims for regulation of the current in a hydrogen cell stack.

14. Method for operating the AC to DC converter (100, 300) according to any one of the claims 1 to 12 as long as depending on claim 6 comprising operating at least all but one of the voltage controllers in either full blocking mode or full conduction mode.
